# DEMANDE DE BREVET EUROPEEN

(11) **EP 3 572 139 A1**
(43) Date de publication de la demande: **27.11.2019**
(21) Numéro de dépôt: 19173926.7
(22) Date de dépôt: 10.05.2019
(51) Int. Cl.: B01D 53/04, B01D 53/26, G01N 30/08, G01N 30/38, G01N 30/88, G01N 1/22, G01N 1/40, A61B 5/08

(54) **RÉSEAU FLUIDIQUE DE CONTRÔLE D'AU MOINS UN FLUX GAZEUX ET SYSTÈME EMPLOYANT LEDIT RÉSEAU**

(30) Priorité: 25.05.2018 FR 1854423
(71) Demandeur: Commissariat à l'Énergie Atomique et aux Énergies Alternatives, 75015 Paris (FR)
(72) Inventeur: BOURLON, Bertrand, 38054 GRENOBLE CEDEX 09 (FR)
(74) Mandataire: GIE Innovation Competence Group

(57) **Abrégé**

L'invention concerne Réseau fluidique (R) de contrôle d'un flux gazeux qui comporte plusieurs unités de préconcentration (Ui,j), dont au moins une première suite dont les unités de préconcentration sont reliées en série et définies chacune par un rang j dans ladite suite, avec j allant de 1 à m et m supérieur ou égal à 2, chaque unité de préconcentration dudit réseau comprenant :
∘ une cavité remplie d'un matériau adsorbant,
∘ au moins une première voie fluidique (V1) débouchant dans ladite cavité,
∘ au moins une deuxième voie fluidique (V2) débouchant dans ladite cavité,
∘ des moyens de chauffage de ladite cavité.

## Description

### Domaine technique de l'invention

La présente invention se rapporte à un réseau fluidique de contrôle d'au moins un flux gazeux et à un système employant ledit réseau fluidique. Le réseau fluidique comporte notamment plusieurs unités de préconcentration reliées entre elles. L'invention concerne également un procédé de séparation de composés gazeux présents dans un flux gazeux.

### Etat de la technique

De manière connue, une unité de préconcentration en silicium comporte une cavité remplie d'un matériau adsorbant et des moyens de chauffage contrôlés afin d'établir une température dans sa cavité. Ce type d'unité est notamment destiné à recevoir un flux gazeux et permet de bloquer/stocker dans sa cavité des composés du flux gazeux ou de les libérer totalement ou partiellement. Une telle unité, de faible capacité thermique, peut en effet rapidement et à faible puissance être contrôlée thermiquement. La température à laquelle l'unité est chauffée permet de faire varier les constantes d'équilibre d'adsorption des composés sur la phase adsorbante. Des tables permettent notamment d'indiquer les composés qui seront fixés ou relargués par une unité de préconcentration en fonction de la nature de l'adsorbant utilisé ainsi que de la température fixée au niveau de l'unité.

La publication référencée "Alfeeli, B., Agah, M., MEMS-Based selective preconcentration of trace level breath analytes, (2009) IEEE Sensors Journal, 9 (9), art. no. 5191282, pp. 1068-1075" décrit notamment la mise en série de deux unités de préconcentration contrôlées de manière individuelle afin notamment de pouvoir trier différents composés présents dans un même flux gazeux.

Cette application antérieure s'avère cependant assez limitée et on s'est aperçu qu'il pourrait être opportun d'utiliser de telles unités de préconcentration pour des applications plus évoluées de contrôle d'un flux gazeux.

Les demandes de brevets US2009/308136A1 et US2004/056016A1 décrivent toutes deux des pré-concentrateurs à plusieurs compartiments.

Le but de l'invention est donc de proposer un réseau fluidique qui permet de contrôler au moins un flux gazeux et de réaliser des opérations de type addition, soustraction, filtration, réaction, déplacement, mélange sur un ou plusieurs flux gazeux injectés dans ledit réseau.

### Exposé de l'invention

Ce but est atteint par un réseau fluidique de contrôle d'un flux gazeux comprenant :
- Une entrée fluidique et une sortie fluidique,
- Plusieurs unités de préconcentration, chaque unité de préconcentration dudit réseau comprenant :
   ∘ une cavité remplie d'un matériau adsorbant,
   ∘ au moins une première voie fluidique débouchant dans ladite cavité,
   ∘ au moins une deuxième voie fluidique débouchant dans ladite cavité,
   ∘ des moyens de chauffage de ladite cavité,
- Caractérisé en ce que, entre l'entrée fluidique et la sortie fluidique, le réseau comporte :
- Au moins une première suite de plusieurs unités de préconcentration reliées en série, lesdites unité de préconcentration de ladite première suite étant définies chacune par un rang j, avec j allant de 1 à m et m supérieur ou égal à 2 et,
- Une ou plusieurs autres unités de préconcentration reliées en parallèle aux unités de préconcentration de ladite première suite pour former une matrice et/ou une liaison fluidique supplémentaire pour court-circuiter une ou plusieurs unités de préconcentration de la première suite.

Dans le premier cas, on a ainsi au moins une unité de préconcentration supplémentaire du réseau qui est reliée à une unité de préconcentration de la première suite qui est située à un rang compris entre 2 et m-1.

Dans le deuxième cas, la liaison fluidique supplémentaire peut être une liaison directe, c'est-à-dire sans unité de préconcentration intermédiaire, ou via une ou plusieurs autres unités de préconcentration du réseau.

Dans une série de plusieurs unités de préconcentration, la première voie fluidique de l'unité de préconcentration de rang 1 est reliée directement à l'entrée fluidique. Pour les unités de rang j, avec j allant de 2 à m-1, la première voie fluidique d'une unité de rang j quelconque est reliée à la deuxième voie fluidique de l'unité de rang j-1 et sa deuxième voie fluidique est reliée à la première voie fluidique de l'unité de rang j+1. La deuxième voie fluidique de l'unité de rang m est reliée directement à la sortie fluidique.

Selon une réalisation particulière, ladite première suite comporte m unités de préconcentration, avec m qui est au moins égal à trois, et au moins une unité de préconcentration présente du rang 2 à m-1 comporte une troisième voie fluidique reliée à une autre unité de préconcentration du réseau, distincte de celles de la première suite.

Selon une autre réalisation particulière, ladite première suite d'unités de préconcentration comporte m unités de préconcentration, avec m qui est au moins égal à trois, et au moins une unité de préconcentration présente du rang 2 à m-1 de ladite suite comporte une troisième voie fluidique reliée à une première unité de préconcentration du réseau distincte de celles de la première suite et une quatrième voie fluidique reliée à une deuxième unité de préconcentration du réseau distincte de celles de la première suite et de ladite première unité de préconcentration.

Selon une autre réalisation particulière, le réseau est organisé en une matrice qui comporte plusieurs suite d'unités de préconcentration, définies chacune par un rang i, i allant de 1 à n et n supérieur ou égal à 2 et comportant plusieurs unités de préconcentration reliées en série et définies chacune par un rang j dans chaque suite de rang i, avec j allant de 1 à m et m supérieur ou égal à 2, et chaque unité de préconcentration de rang j, avec j allant de 1 à m d'une suite de rang i est reliée par une liaison fluidique distincte avec une unité de préconcentration correspondante de même rang j dans la suite de rang i+1.

Selon une particularité, ladite matrice comporte n suites d'unités de préconcentration avec n supérieur ou égal à 3 présentant chacune m unités de préconcentration avec m supérieur ou égal à 3, et, pour toutes les suites de rang i avec i allant de 2 à n-1, les unités de préconcentration de rang j allant de 2 à m-1 comporte quatre voies fluidiques pour être reliée chacune à l'unité de préconcentration de même rang j présente à la suite de rang i-1 et à la série de rang i+1.

Selon une autre réalisation particulière, le réseau comporte au moins un noeud fluidique réalisé à la liaison entre deux unités de préconcentration adjacentes de ladite première suite et le réseau comporte une première unité de préconcentration reliée audit noeud fluidique.

Selon une particularité, le réseau comporte une deuxième unité de préconcentration reliée audit noeud fluidique.

Selon une autre particularité, chaque unité de préconcentration est configurée pour prendre au moins trois états distincts, un premier état dans lequel les moyens de chauffage sont à une première température, un deuxième état dans lequel les moyens de chauffage sont à une deuxième température et un troisième état dans lequel les moyens de chauffage sont à une troisième température, ladite troisième température étant à une valeur plus importante que celle de la deuxième température et ladite deuxième température étant à une valeur plus importante que celle de la première température.

Selon une autre particularité, le matériau adsorbant présent dans la cavité de chaque unité de préconcentration est de type Tenax (marque déposée).

Selon une autre particularité, moins une unité de préconcentration du réseau comporte au moins un catalyseur de réaction chimique placé dans sa cavité.

L'invention concerne également un système de contrôle d'un flux gazeux, comprenant au moins une entrée fluidique destinée à recevoir le flux gazeux, ledit système comportant :
- Un réseau fluidique tel que défini ci-dessus qui est relié à ladite entrée fluidique,
- Un ensemble de contrôle de déplacement fluidique dans ledit réseau fluidique,
- Une unité de commande configurée pour exécuter une séquence de commande comprenant des instructions de commande à destination des moyens de chauffage de chaque unité de préconcentration dudit réseau et de l'ensemble de contrôle de déplacement fluidique dans ledit réseau.

Selon une particularité, l'ensemble de contrôle de déplacement fluidique dans ledit réseau comporte une ou plusieurs vannes agencées dans le réseau et une ou plusieurs pompes agencées dans ledit réseau.

Selon une autre particularité, ladite séquence de commande comporte une succession d'états pris par chaque pompe, chaque vanne de l'ensemble de contrôle de déplacement fluidique et par chacun des moyens de chauffage de chaque unité de préconcentration du réseau.

L'invention concerne également un procédé de séparation de N composés gazeux présent dans un flux gazeux, N étant supérieur ou égal à 2, ledit procédé étant mis en oeuvre à partir d'un réseau fluidique organisé en matrice défini par n=2 et m=2 dans lequel chaque unité de préconcentration est référencé Ui,j, et le procédé comporte au moins un cycle de séparation qui consiste, dans chaque unité de préconcentration de la matrice, à :
- Piéger au moins un premier composé gazeux dudit flux gazeux dans l'unité de préconcentration et libérer N-1 composé gazeux dudit flux gazeux vers une autre unité de préconcentration de la matrice,
- Evacuer ledit premier composé présent dans l'unité de préconcentration.

### Brève description des figures

D'autres caractéristiques et avantages vont apparaître dans la description détaillée qui suit faite en regard des dessins annexés dans lesquels :
- La figure 1 représente de manière schématique le système de contrôle de flux gazeux de l'invention ;
- La figure 2 représente de manière schématique une unité de préconcentration employée dans le réseau fluidique de l'invention ;
- La figure 3 illustre trois états A, B et C distincts pris par une unité de préconcentration ;
- La figures 4 représente de manière schématique, une configuration générale du réseau fluidique de l'invention ;
- Les figures 5 à 18 représentent d'autres configurations du réseau fluidique de l'invention ;
- Les figures 19 à 22 illustrent des solutions d'opérations mises en oeuvre dans différentes configurations du réseau fluidique de l'invention ;

### Description détaillée d'au moins un mode de réalisation

Le système de contrôle de flux gazeux comporte un réseau R de plusieurs unités de préconcentration Ui,j interconnectées.

Une unité de préconcentration Ui,j permet d'accumuler, à l'aide d'un adsorbant, des composants présents dans un flux gazeux entrant et permet de libérer partiellement ou totalement le flux gazeux, par désorption thermique.

Chaque unité de préconcentration du réseau peut se présenter sous la forme d'un microcomposant en silicium.

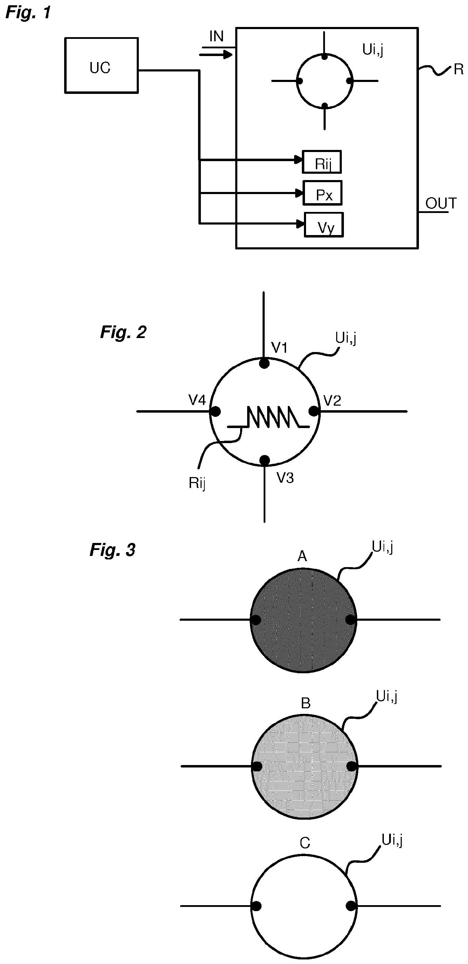

En référence à la figure 2, chaque unité de préconcentration Ui,j du réseau comporte un boîtier présentant au moins une cavité dans laquelle est placé le matériau adsorbant. Dans sa cavité, chaque unité de préconcentration peut comporter une microstructure (par exemple des micro-piliers) recouverte d'un matériau adsorbant.

Le matériau adsorbant peut être réalisé sous la forme de particules de Tenax ou de tout autre matériau utilisé classiquement (marque déposée).

Chaque unité de préconcentration Ui,j est dotée de moyens de chauffage appliqués sur son boîtier. Les moyens de chauffage peuvent être réalisés sous la forme d'une résistance chauffante Rij dont la température Tij peut être facilement ajustée. Un capteur de température (par exemple sous la forme d'une résistance de mesure) peut également être présent. Selon la température qui est réglée au niveau d'une unité de préconcentration et le type d'adsorbant qui est employé dans cette unité, il est possible de contrôler le flux gazeux et ainsi de gérer quels sont les composés présents dans le flux gazeux qui seront fixés ou relargués au niveau de l'unité contrôlé. Des tables permettent en effet d'indiquer les composés qui seront fixés ou relargués par une unité de préconcentration en fonction de la nature de l'adsorbant utilisé ainsi que de la température fixée au niveau de l'unité.

De manière non limitative, on a par exemple les données suivantes :
- Taille d'une unité de préconcentration réalisée sous forme d'un composant silicium : 10mmx10mm, silicium, 2 entrées et 2 sorties ;
- Taille des cavités fluidiques : 1µL à 100 µL ;
- Adsorbant employé de type commerciaux (marques déposées) : Tenax TA, Tenax GR, Carbostrap, Carbostrap C, Carboxen 569, Carbosieve SIII,...
- Températures utilisées typiques allant de 0 à 300 °C ;

Il faut noter que l'ensemble du réseau fluidique pourra lui-même être placé dans une enceinte thermiquement contrôlée, ceci notamment afin d'éviter la condensation dans les liaisons fluidiques du réseau.

En référence à la figure 2, chaque unité de préconcentration Ui,j peut comporter au moins deux voies fluidiques V1, V2. Par voie fluidique, on veut dire une ouverture à travers laquelle le flux gazeux peut circuler pour pénétrer dans la cavité de l'unité de préconcentration ou en sortir. Pour établir le réseau fluidique, les liaisons fluidiques du réseau sont connectées sur les voies fluidiques des unités de préconcentration.

Chaque unité de préconcentration peut également comporter trois voies fluidiques V1, V2, V3 ou même quatre voies fluidiques V1, V2, V3, V4 de même type. Le nombre de voies fluidiques présentes sur chaque unité de préconcentration pourra dépendre du type de réseau fluidique réalisé. Bien entendu, il sera possible de prévoir un réseau qui comporte des unités de préconcentration qui comportent toutes quatre voies fluidiques et d'employer des moyens de contrôle (vanne+pompes - voir ci-dessous) adaptés à l'application visée.

Dans la suite de la description, les voies fluidiques d'une même unité de préconcentration sont dites "première voie fluidique" V1, "deuxième voie fluidique" V2, "troisième voie fluidique" V3 et "quatrième voie fluidique" V4. Celles-ci sont toutes équivalentes et peuvent chacune être utilisées comme entrée ou sortie, selon le sens de circulation des flux gazeux dans le réseau.

En référence à la figure 3, chaque unité de préconcentration Ui,j peut ainsi prendre trois états en fonction de la température qui lui est affectée :
- Un état A, dit fermé, obtenu à une première température T1, dite froide. Dans cet état, les composés du flux gazeux entrant sont tous piégés dans la cavité de l'unité et aucun flux gazeux ne ressort de la cavité.
- Un état B, dit intermédiaire, obtenu à une deuxième température T2, ayant une valeur plus élevée que celle de la température T1. Dans cet état B, certains composés du flux gazeux entrant sont piégés dans la cavité et d'autres composés du flux gazeux sont libérés par désorption thermique. Selon la valeur prise par cette température T2, les composés piégés ou libérés pourront différer.
- Un état C, dit ouvert, obtenu à une troisième température T3 dont la valeur est plus élevée que celle de la deuxième température T2. Dans cet état, la totalité du flux gazeux entrant est libéré et peut ainsi être aspiré.

Bien entendu, le choix des températures de fonctionnement pourra différer en fonction du matériau adsorbant qui est employé dans l'unité et des composés qui sont présents dans le flux gazeux et que l'on souhaite contrôler, c'est-à-dire piéger ou libérer.

Selon un aspect particulier de l'invention, en référence à la figure 1, le système de contrôle de flux gazeux comporte également un ensemble de contrôle du déplacement fluidique dans ledit réseau. Cet ensemble de contrôle se compose principalement de pompes Px et de vannes Vy qui sont positionnées de manière adaptée dans le réseau R pour assurer le déplacement du flux gazeux dans le réseau à travers des liaisons fluidiques, d'une unité de préconcentration à une autre. En remplacement ou en complément des pompes Px, il serait également possible d'utiliser un système d'injection de gaz sous-pression (par exemple des bouteilles). Le gaz peut alors être injecté dans le réseau fluidique pour déplacer les flux gazeux.

Les pompes Px sont par exemple positionnées par rapport au réseau de manière à fonctionner en aspiration. L'actionnement d'une pompe Px permet en effet de déplacer un flux gazeux d'un point à un autre du réseau. Une pompe Px pourra notamment être positionnée en bout de chaque suite d'unités de préconcentration du réseau afin de commander le déplacement du flux gazeux d'une unité de préconcentration de la suite à une autre unité de préconcentration de la suite. Les autres moyens de déplacement employés seront positionnés de manière adaptée pour favoriser le déplacement des flux gazeux dans le réseau.

Les vannes sont placées de manière à contrôler le déplacement du flux gazeux dans le réseau R en permettant d'ouvrir ou de fermer les liaisons fluidiques du réseau. Elles sont par exemple positionnées sur chaque liaison fluidique du réseau présente entre deux unités de préconcentration du réseau. La commande des différentes vannes et des pompes sur le réseau est notamment adaptée à l'application visée et au contrôle à effectuer sur le flux gazeux.

Pour commander l'ensemble de contrôle détaillé ci-dessus ainsi que les moyens de chauffage de chaque unité de préconcentration, le système peut comporter une unité de commande UC, comprenant notamment un microprocesseur et plusieurs entrées/sorties lui permettant d'assurer le déplacement des flux gazeux dans le réseau selon l'application visée. Pour l'unité de commande, il s'agit ainsi de :
- Contrôler l'activation ou la désactivation de chaque pompe Px afin de commander un déplacement de chaque flux gazeux dans le réseau ;
- Contrôler l'ouverture ou la fermeture de chaque vanne Vy afin de contrôler le déplacement de chaque flux gazeux dans les liaisons fluidiques du réseau ;
- Contrôler les moyens de chauffage (résistance Rij) de chaque unité de préconcentration Ui,j pour ajuster de manière individuelle la température Ti,j au niveau de chaque unité de préconcentration Ui,j et ainsi commander chaque unité de préconcentration dans un état A, B ou C défini ci-dessus ;

Dans la suite de la description, les termes "relier" et "liaison" doivent être compris comme regroupant toutes les solutions qui permettent de faire circuler un flux gazeux entre deux éléments du système. La circulation du flux gazeux peut ainsi être mise en oeuvre en employant un tuyau, un capillaire, un canal creusé dans un support ou toute autre solution classique adaptée à l'application visée. De manière générale, nous emploierons le terme "liaison fluidique" pour exprimer toutes ces réalisations possibles.

Le réseau de plusieurs unités de préconcentration Ui,j peut être réalisé sur un même support, se présentant par exemple sous la forme d'une carte.

Le système comporte au moins une entrée fluidique IN pour faire entrer un flux gazeux dans le réseau R et peut comporter au moins une sortie fluidique OUT pour évacuer partiellement ou totalement un flux gazeux en dehors du réseau. L'entrée fluidique IN et la sortie fluidique OUT du système peuvent être confondus ou reliés en un même point du réseau. Selon sa topologie, le réseau comportera également une ou plusieurs liaisons fluidiques de commande reliées chacune à une pompe Px pour faire circuler les flux gazeux dans le réseau.

Le réseau d'unités de préconcentration Ui,j peut être plus ou moins complexe selon l'opération que l'on cherche à effectuer sur un flux gazeux.

Le réseau fluidique comporte au moins une suite de plusieurs unités de préconcentration reliées en série. Chaque suite d'unités de préconcentration est définie par un rang i, avec i allant de 1 à n et n supérieur ou égal à 1. Deux unités de préconcentration reliées en série signifie qu'une voie fluidique d'une première unité de préconcentration de la suite est reliée directement à une voie fluidique d'une deuxième unité de préconcentration de la suite. Dans une même suite, les unités de préconcentration reliées en série sont chacune définies avec un rang j, j allant de 1 à m et m est supérieur ou égal à 2, ce qui signifie que la suite comporte au moins deux unités de préconcentration reliées en série. Par principe, on fixe que la mise en série est réalisée en reliant la deuxième voie fluidique d'une unité de préconcentration de rang j quelconque à la première voie fluidique de l'unité de préconcentration adjacente, c'est-à-dire celle de rang j+1. Bien entendu, comme évoqué précédemment, il faut rappeler que toutes les voies fluidiques d'une unité de préconcentration sont équivalentes. Chaque unité de préconcentration Ui,j pourra prendre des coordonnées i,j qui correspondent à la suite dans laquelle elle se trouve et à son rang dans ladite suite.

Selon la topologie du réseau, une même unité de préconcentration pourra faire partie de plusieurs suites d'unités de préconcentration reliées en série. Ce sera le cas notamment lorsqu'une même unité de préconcentration est reliée à deux unités de préconcentration distinctes en parallèle. Dans ce cas, le réseau comporte deux suites d'unités de préconcentration. De manière plus complexe, on verra que le réseau peut comporter plusieurs unités de préconcentration reliées entre elles et organisées en lignes et en colonnes, formant ainsi une matrice dans laquelle chaque unité de préconcentration est identifiée dans la matrice par les coordonnées i,j particulières qui correspondent à sa position dans la matrice.

De manière non limitative, dans chaque suite, l'unité de préconcentration de rang 1 et/ou celle de rang m comporte, pour chaque suite d'unités de préconcentration dont elle fait partie, au moins une voie fluidique qui est reliée à une pompe Px pour permettre le déplacement du flux gazeux dans chacune des suites d'unités de préconcentration dont elle fait partie. Autrement dit, une pompe Px distincte pourra être associée à chaque suite d'unités de préconcentration reliées en série.

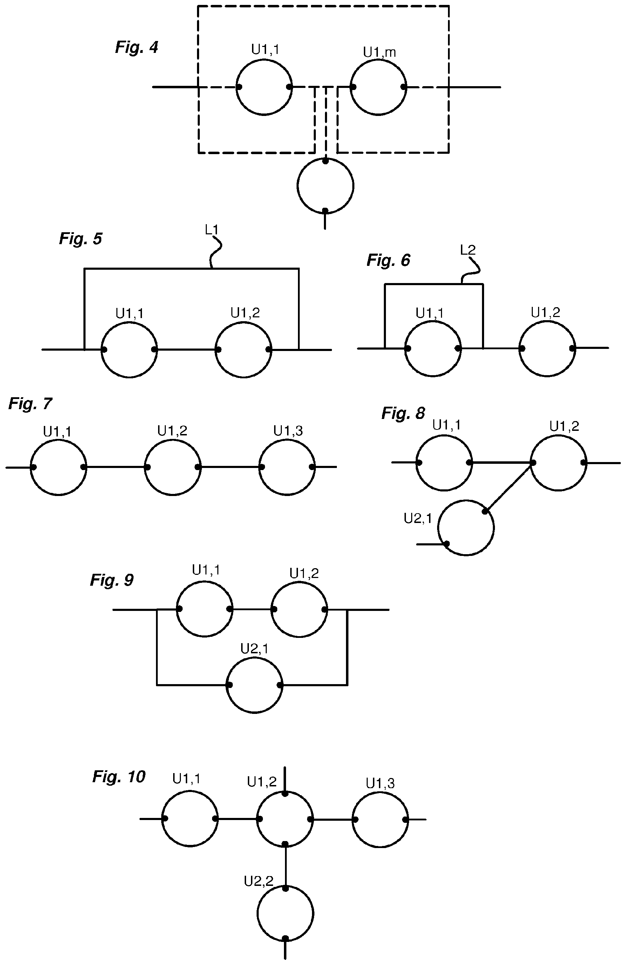

La figure 4 représente une version simplifiée et générale du réseau fluidique R de l'invention.

Le principe du réseau est en effet d'ajouter au moins une liaison fluidique supplémentaire à au moins une suite d'unités de préconcentration en série déjà présente, afin de créer un nouveau chemin pour un flux gazeux présent dans le réseau.

Cette liaison fluidique supplémentaire peut ainsi permettre de :
- Contourner (autrement dit court-circuiter) une seule unité de préconcentration de la suite ou plusieurs unités de préconcentration de la suite. Ce contournement est réalisé en reliant une voie fluidique d'une unité de préconcentration de la suite à une voie fluidique d'une autre unité de préconcentration en contournant au moins une unité de préconcentration de la suite ;
- Relier une unité de préconcentration de la suite à une entrée fluidique ou à au moins une autre unité de préconcentration du réseau, qui est différente de celles déjà présentes dans la suite de manière à former une matrice ; ce principe permettra de créer un réseau de plusieurs unités en parallèle de la suite ;

Partant de ces deux principes, les figures 5 à 18 proposent différentes solutions de réseau plus ou moins complexes. Dans toutes les configurations proposées, de manière non limitative, au moins une voie fluidique d'une unité de préconcentration du réseau est reliée à l'entrée fluidique du système et permet de recevoir le flux gazeux et une voie fluidique d'une autre unité de préconcentration du réseau ou de la même unité de préconcentration du réseau peut être reliée à la sortie fluidique du système, afin de permettre l'évacuation du flux gazeux. L'entrée et la sortie fluidique peuvent cependant être confondus.

### Figure 5

Deux unités de préconcentration U1,1 et U1,2 de la suite sont entièrement contournées par une liaison fluidique L1. La deuxième voie fluidique de la deuxième unité de préconcentration U1,2 est ainsi reliée directement à la première voie fluidique de la première unité de préconcentration U1,1.

### Figure 6

Une seule unité de préconcentration U1,1 d'une suite de deux unités de préconcentration est contournée par une liaison fluidique L2. Sa deuxième voie fluidique est ainsi reliée directement à sa première voie fluidique.

### Figure 7

Une suite de deux unités de préconcentration U1,1 et U1,2 est reliée à une unité de préconcentration U1,3 supplémentaire du réseau, distincte de celles de la suite. Cette unité de préconcentration U1,3 supplémentaire est ici reliée en série avec l'unité de préconcentration de rang m (m=2 sur la figure 7) de la suite, sa première voie fluidique étant reliée à la deuxième voie fluidique de l'unité de préconcentration de rang m de la suite.

### Figure 8

La suite de deux unités de préconcentration en série est reliée à une unité de préconcentration U2,1 supplémentaire du réseau, distincte de celles de la suite. Cette unité de préconcentration U2,1 supplémentaire est ici reliée en parallèle d'au moins une unité de préconcentration de la suite. Elle comporte ainsi une voie fluidique reliée à la première voie fluidique de l'une des unités de préconcentration de la suite qui est présente aux rangs 1 à m.

### Figure 9

La suite d'unités de deux unités de préconcentration U1,1 et U1,2 est contournée à travers une unité de préconcentration U2,1 supplémentaire du réseau. Il s'agit donc de placer au moins une unité de préconcentration U2,1 en parallèle de celles de la suite.

### Figure 10

Au moins une unité de préconcentration U1,2 de la suite est dotée d'une troisième voie fluidique à laquelle est reliée une unité de préconcentration U2,2 supplémentaire du réseau.

### Figure 11

Deux unités de préconcentration U1,1 et U1,2 de la suite présentent chacune trois voies fluidiques. Leur troisième voie fluidique est reliée à une même autre unité de préconcentration U2,1 du réseau, de manière à former une maille en forme de triangle. Cette unité de préconcentration U2,1 comporte également trois voies fluidiques.

### Figure 12

Au moins une unité de préconcentration U,2,2 de la suite est dotée d'une troisième voie fluidique à laquelle est reliée une unité de préconcentration U1,2 du réseau, différente de celles de la suite, et d'une quatrième voie fluidique à laquelle est reliée encore une autre unité de préconcentration U3,2 du réseau, différente de celles de la suite.

### Figure 13

Il s'agit de créer une maille en connectant, en parallèle d'au moins deux unités de préconcentration U1,1 et U1,2 de la suite, au moins deux autres unités de préconcentration U2,1 et U2,2 du réseau.

### Figure 14

Il s'agit de réaliser une matrice complète de plusieurs unités de préconcentration. On a ainsi plusieurs suites d'unités de préconcentration organisées en plusieurs lignes parallèles identiques. Chaque ligne est identifiée par le rang i avec i allant de 1 à n, avec n supérieur ou égal à 3. Dans chaque ligne, les unités de préconcentration sont reliées en série et définies avec un rang j allant de 1 à m, avec m qui est supérieur ou égal à 3. Dans la matrice, chaque unité de préconcentration peut ainsi être identifiée par les coordonnées i et j, qui correspondent respectivement au rang de la ligne dans laquelle elle se trouve et à son rang dans ladite ligne.

Dans cette solution, toutes les unités de préconcentration peuvent être identiques à quatre voies fluidiques. La maille de la matrice est ainsi de forme parallélépipédique.

### Figure 15

Il s'agit de réaliser au moins un noeud fluidique N dans le réseau sur une liaison fluidique présente entre deux unités de préconcentration en série dans une suite. Le noeud fluidique N permet ainsi de court-circuiter une liaison et permet de connecter une liaison fluidique formant une entrée ou sortie fluidique.

### Figure 16

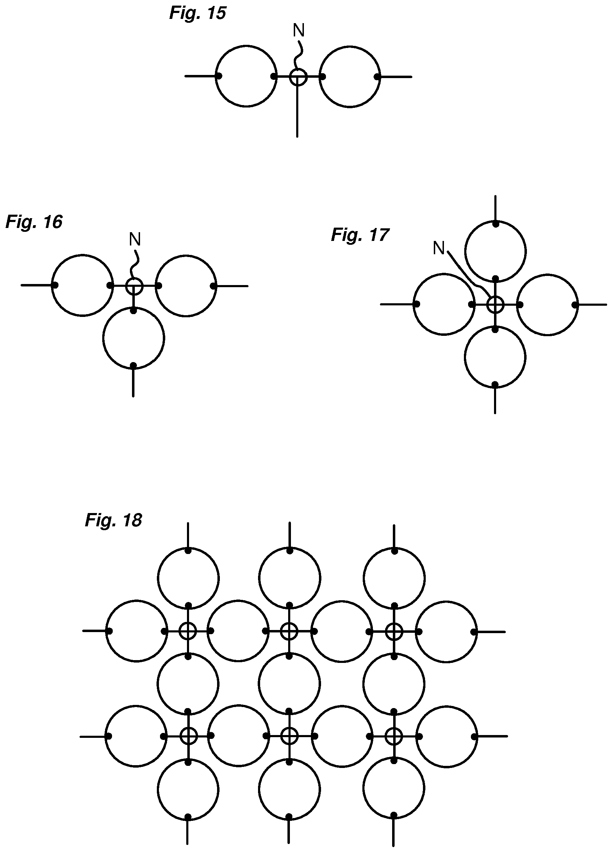

Le noeud fluidique réalisé dans la configuration de la figure 15 est relié à au moins une autre unité de préconcentration du réseau.

### Figure 17

Par rapport à la figure précédente, il s'agit de relier une unité de préconcentration supplémentaire au noeud fluidique.

### Figure 18

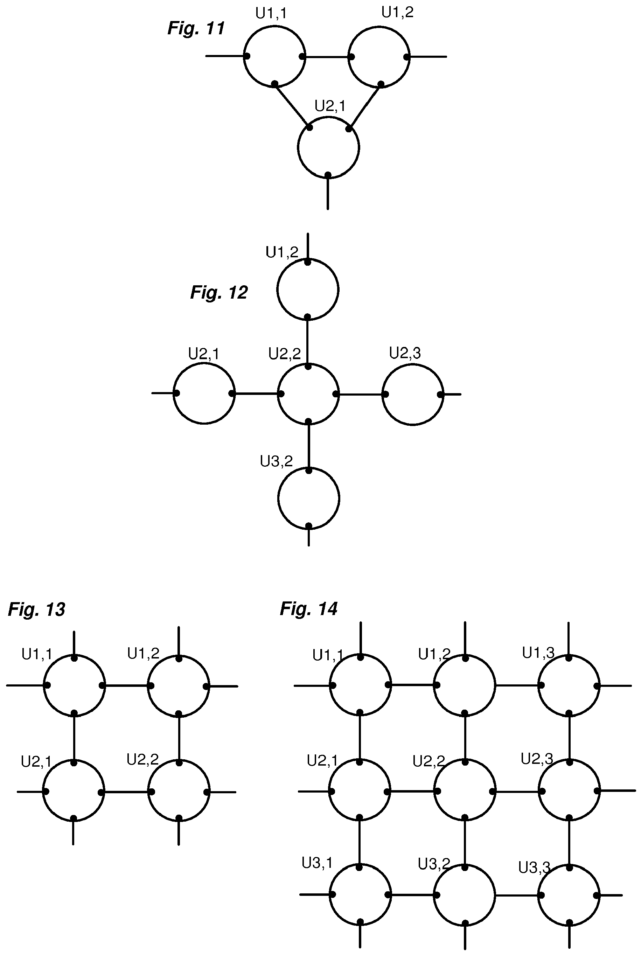

Partant du principe de noeud fluidique des figures 15 à 17, il est possible de réaliser une matrice complète à plusieurs noeuds fluidiques formant les intersections de la matrice. Cette configuration est une variante de la matrice de la figure 14. Des moyens de contrôle adaptés permettent en effet de mettre en oeuvre un contrôle du flux gazeux équivalent à celui qu'il est possible d'obtenir avec la matrice de la figure 14. Cette configuration permet d'employer des unités de préconcentration qui ne disposent que de deux voies fluidiques.

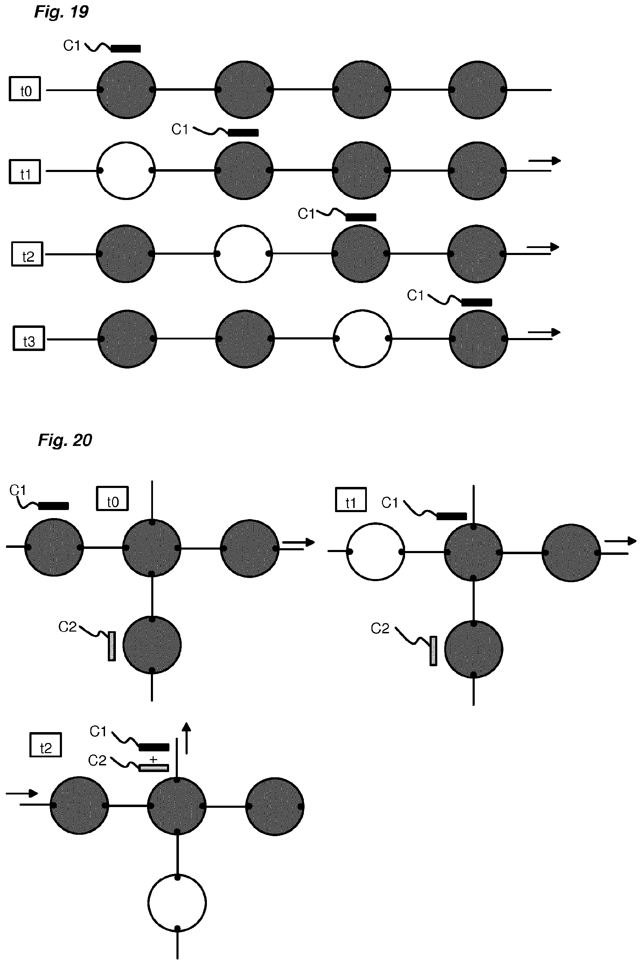

Partant des différentes configurations décrites ci-dessus, les figures 19 à 22 illustrent différentes opérations qu'il est possible de mettre en oeuvre à partir de certaines des configurations du réseau fluidique qui ont été décrites ci-dessus. Sur ces figures, les positions prises dans le réseau par chaque composé gazeux C1, C2, C3 distinct sont représentées par un rectangle de couleur (noir, gris foncé et gris clair).

### Figure 19

La figure 17 illustre le principe de déplacement d'un composé gazeux C1 dans une suite de quatre unités de préconcentration reliées en série.

A t0, toutes les unités de préconcentration sont dans l'état A fermé. Le composé gazeux est piégé dans la première unité de préconcentration U1,1 de la suite.

A t1, la première unité de préconcentration U1,1 est chauffée de manière à passer dans l'état C ouvert. Une commande de la pompe, associée à la suite d'unités de préconcentration, permet de faire passer le composé gazeux C1 dans la deuxième unité de préconcentration U1,2 de la suite. La deuxième unité de préconcentration U1,2 étant à l'état A fermé, le composé gazeux est piégé dans cette deuxième unité de préconcentration.

Le même principe est reproduit aux instant t2 et t3, permettant ainsi de faire passer le composé gazeux jusqu'à la quatrième unité de préconcentration U1,4 de la suite.

### Figure 20

La figure 20 illustre le principe d'addition de deux composés gazeux C1, C2 distincts à l'aide d'un réseau qui comporte une première suite de trois unités de préconcentration U1,1, U1,2, U1,3 reliées en série et une deuxième suite de deux unités de préconcentration reliées en série, cette deuxième suite étant créée en employant l'unité de préconcentration de rang 2 de la première suite. Un premier composé gazeux C1 est injecté dans la première suite d'unités de préconcentration et un deuxième composé gazeux C2 est injecté dans la deuxième suite d'unités de préconcentration.

A t0, les unités de préconcentration de la première suite et celles de la deuxième suite sont toutes à l'état A fermé. Le premier composé gazeux C1 est piégé dans l'unité de préconcentration U1,1. Le deuxième composé gazeux C2 est piégé dans l'unité de préconcentration de coordonnées U2,2.

A t1, l'unité de préconcentration 1,1 est chauffé pour passer à l'état C ouvert. Une pompe est activée, permettant de faire passer le premier composé gazeux C1 dans l'unité de préconcentration U1,2. Le premier composé gazeux C1 est alors piégé dans l'unité de préconcentration U1,2.

A t2, l'unité de préconcentration U2,2 est commandé à l'état C ouvert. Une pompe est actionnée permettant de faire passer le deuxième composé gazeux C2 dans l'unité de préconcentration U1,2. Le premier composé gazeux et le deuxième composé gazeux sont alors piégés tous les deux dans l'unité de préconcentration U1,2.

### Figure 21

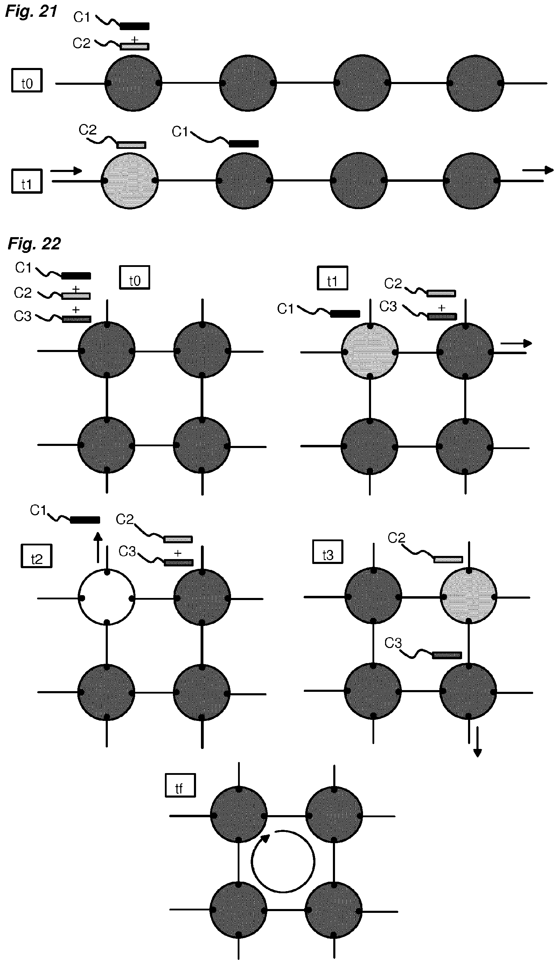

La figure 21 illustre le principe de séparation/soustraction entre deux composés gazeux C1, C2 présents dans un même flux. Il est mis en oeuvre en utilisant une suite de plusieurs unités de préconcentration reliées en série.

A t0, toutes les unités de préconcentration sont à l'état A fermé. Les deux composés gazeux C1, C2 sont piégés dans la première unité de préconcentration 1,1 de la suite.

A t1, la première unité de préconcentration U1,1 est chauffée à la température T2 lui permettant de rentrer dans l'état B intermédiaire. Dans cette configuration, seul le premier composé gazeux C1 est libéré et rejoint, sous l'action d'une pompe, la deuxième unité de préconcentration U1,2 de la suite. Le deuxième composé gazeux C2 reste piégé dans la première unité de préconcentration U1,1.

### Figure 22

La figure 22 illustre un principe de séparation par dichotomie entre plusieurs composés gazeux (N composés gazeux) présents dans un même flux. Pour cela, on utilise quatre unités de préconcentration reliées entre elles en formant une maille telle que celle représentée sur la figure 12.

A t0, toutes les unités de préconcentration sont à l'état A fermé et trois composés gazeux C1, C2, C3 distincts sont piégés dans l'unité de préconcentration de U1,1.

A t1, l'unité de préconcentration U1,1 est chauffée pour passer dans un état B intermédiaire. Une pompe est actionnée permettant d'aspirer le deuxième composé gazeux C2 et le troisième composé gazeux C3 vers l'unité de préconcentration 1,2. Le premier composé gazeux C1 reste piégé dans la première unité de préconcentration U1,1 de la matrice.

A t2, l'unité de préconcentration U1,1 est passé dans l'état C ouvert permettant de libérer le premier composé gazeux C1. Une pompe est actionnée pour aspirer le premier composé gazeux C1 en dehors du réseau formé par la maille.

A t3, l'unité de préconcentration U1,2 est chauffée à la température T2 pour passer dans un état B intermédiaire (qui est différent de l'état intermédiaire obtenu pour l'unité de préconcentration 1,1), permettant de libérer le troisième composé gazeux C3 tout en conservant le deuxième composé gazeux C2. Une pompe est actionnée afin d'aspirer le troisième composé gazeux C3 vers l'unité de préconcentration U2,2. Le deuxième composé gazeux C2 reste piégé dans l'unité de préconcentration U1,2.

Il s'agira ensuite d'évacuer le deuxième échantillon gazeux de l'unité de préconcentration U1,2. Si le flux gazeux comporte un autre composé gazeux, il est possible de le séparer en utilisant l'unité de préconcentration U2,2 puis l'unité de préconcentration U2,1 puis de recommencer chaque cycle en repartant de l'unité de préconcentration U1,1. Il est possible de mener plusieurs cycles successifs (jusqu'à tf) afin de séparer les N composés gazeux présents dans un même flux gazeux. Il s'agit juste de commander chaque unité de préconcentration dans l'état intermédiaire adapté pour cibler les composés à piéger et ceux à libérer.

De façon récursive, en enchainant par exemple de telles cycles, il est donc possible de séparer par dichotomie et détecter les différents composés gazeux séparés. A noter que certains composés sortis de la boucle peuvent être réinjectés dans la boucle de manière à par exemple assurer une séparation plus fine en poids moléculaires, en ajustant plus finement les températures des unités de préconcentration.

On comprend qu'il s'agit donc de faire tourner récursivement un échantillon tout en faisant varier graduellement les températures des unités de préconcentration afin d'assurer une séparation sur puce, réalisant ainsi de façon originale une "chromatographie digitale". Bien entendu, il serait possible d'appliquer le même principe sur une maille plus importante, c'est-à-dire qui comporte plus de quatre unités de préconcentration.

Selon un aspect particulier de l'invention, chaque séquence de commande du déplacement des flux gazeux dans un réseau est mise en en oeuvre par l'unité de commande. La séquence consiste en une suite d'instructions comportant l'état de chaque composant du système, notamment l'état ouvert/fermé de chaque vanne, le niveau de température affecté à chaque unité de préconcentration du réseau et l'état de chaque pompe, actif ou inactif, pour engendrer ou non le déplacement des flux gazeux dans le réseau de manière appropriée.

De manière non limitative, il faut également noter que :
- Chaque unité de préconcentration est avantageusement maintenue en suspension par un support (par exemple circuit imprimé) de façon à minimiser les transferts thermiques et la capacité thermique du composant. Ceci permet de garder des réponses thermiques rapides des composant (par exemple variation de 200°C en 10 s en utilisant une alimentation 12V et 2A).
- Il est envisageable d'utiliser les unités de préconcentration décrites ci-dessus pour faire des réactions chimiques. Par exemple, mélanger et faire réagir au niveau d'une unité de préconcentration un alcool et un acide carboxylique afin d'effectuer une estérification. Ce type de réactions par exemple est possible sur support solide, comme décrit dans la littérature.
- Il est possible de mettre en oeuvre les réactions chimiques au niveau d'une unité de préconcentration pour, par exemple, aider à caractériser la présence de fonctions chimiques sur les molécules analysés. Dans le cas d'un acide carboxylique par exemple : le poids de la molécule et ses propriétés d'adsorption/désorption avec une phase adsorbante seront modifiés après estérification. En comparant les propriétés d'adsorption/désorption de la molécule avant/après réaction (en analysant par exemple s'il est nécessaire de modifier la limite de température d'une unité de préconcentration pour la rendre passante), il sera possible donc de confirmer la présence d'une fonction acide carboxylique.

- Les unités de préconcentration contiennent chacune une cavité qui peut utiliser un ou plusieurs types de matériaux adsorbant, choisis suivant les analytes étudiés. Ces matériaux adsorbant peuvent également contenir des catalyseurs afin de réaliser des réactions chimiques sur support solide.
- Une/plusieurs des sorties du réseau peuvent être connectées à un détecteur (par exemple de type micro-TCD - Détecteur à Thermo-conduction) de façon à détecter et quantifier les composés gazeux envoyés vers cette sortie. Il est également possible d'incorporer un détecteur de gaz (de type micro-TCD par exemple) sur chaque voie fluidique entre deux unités de préconcentration afin de suivre les déplacements des composés gazeux dans le réseau et de quantifier lesdits composés gazeux

Un tel système de contrôle peut ainsi être employé pour de nombreuses applications, parmi lesquelles la préparation d'échantillons gazeux, la réalisation de micro-réaction/micro-usines ou l'analyse de composés gazeux.

Il pourra également être employé pour stocker un ensemble de plusieurs composés gazeux. Après séparation (par exemple selon la méthode évoquée ci-dessus en liaison avec la figure 22), chaque composé gazeux est stocké dans une unité de préconcentration distincte du réseau.

Il sera ainsi possible d'y associer des solutions de détection, par exemple de type chromatographie en phase gazeuse.

## Revendications

1. Réseau fluidique (R) de contrôle d'un flux gazeux comprenant :
- Une entrée fluidique et une sortie fluidique,
- Plusieurs unités de préconcentration (Ui,j), chaque unité de préconcentration dudit réseau comprenant :
∘ une cavité remplie d'un matériau adsorbant,
∘ au moins une première voie fluidique (V1) débouchant dans ladite cavité,
∘ au moins une deuxième voie fluidique (V2) débouchant dans ladite cavité,
∘ des moyens de chauffage de ladite cavité,
- **Caractérisé en ce que**, entre l'entrée fluidique et la sortie fluidique, le réseau comporte :
- Au moins une première suite de plusieurs unités de préconcentration reliées en série, lesdites unité de préconcentration de ladite première suite étant définies chacune par un rang j, avec j allant de 1 à m et m supérieur ou égal à 2 et,
- Une ou plusieurs autres unités de préconcentration reliées en parallèle aux unités de préconcentration de ladite première suite pour former une matrice et/ou une liaison fluidique supplémentaire pour court-circuiter une ou plusieurs unités de préconcentration de la première suite.

2. Réseau selon la revendication 1, **caractérisé en ce que** ladite première suite comporte m unités de préconcentration, avec m qui est au moins égal à trois, et **en ce que** au moins une unité de préconcentration présente du rang 2 à m-1 comporte une troisième voie fluidique (V3) reliée à une autre unité de préconcentration du réseau, distincte de celles de la première suite.

3. Réseau selon la revendication 1, **caractérisé en ce que** ladite première suite d'unités de préconcentration comporte m unités de préconcentration, avec m qui est au moins égal à trois, et **en ce que** au moins une unité de préconcentration présente du rang 2 à m-1 de ladite suite comporte une troisième voie fluidique (V3) reliée à une première unité de préconcentration du réseau distincte de celles de la première suite et une quatrième voie fluidique (V4) reliée à une deuxième unité de préconcentration du réseau distincte de celles de la première suite et de ladite première unité de préconcentration.

4. Réseau selon la revendication 1, **caractérisé en ce que** ladite matrice comporte plusieurs suites d'unités de préconcentration, définies chacune par un rang i, i allant de 1 à n et n supérieur ou égal à 2 et comportant plusieurs unités de préconcentration reliées en série et définies chacune par un rang j dans chaque suite de rang i, avec j allant de 1 à m et m supérieur ou égal à 2, et **en ce que** chaque unité de préconcentration de rang j, avec j allant de 1 à m d'une suite de rang i est reliée par une liaison fluidique distincte avec une unité de préconcentration correspondante de même rang j dans la suite de rang i+1.

5. Réseau selon la revendication 4, **caractérisé en ce que** ladite matrice comporte n suites d'unités de préconcentration avec n supérieur ou égal à 3 présentant chacune m unités de préconcentration avec m supérieur ou égal à 3, et **en ce que**, pour toutes les suites de rang i avec i allant de 2 à n-1, les unités de préconcentration de rang j allant de 2 à m-1 comporte quatre voies fluidiques pour être reliée chacune à l'unité de préconcentration de même rang j présente à la suite de rang i-1 et à la série de rang i+1.

6. Réseau selon la revendication 1, **caractérisé en ce que** le réseau comporte au moins un noeud fluidique (N) réalisé à la liaison entre deux unités de préconcentration adjacentes de ladite première suite et **en ce que** le réseau comporte une première unité de préconcentration reliée audit noeud fluidique (N).

7. Réseau selon la revendication 6, **caractérisé en ce que** le réseau comporte une deuxième unité de préconcentration reliée audit noeud fluidique (N).

8. Réseau selon l'une des revendications 1 à 7, **caractérisé en ce que** chaque unité de préconcentration est configurée pour prendre au moins trois états distincts, un premier état (A) dans lequel les moyens de chauffage sont à une première température, un deuxième état (B) dans lequel les moyens de chauffage sont à une deuxième température et un troisième état (C) dans lequel les moyens de chauffage sont à une troisième température, ladite troisième température étant à une valeur plus importante que celle de la deuxième température et ladite deuxième température étant à une valeur plus importante que celle de la première température.

9. Réseau selon l'une des revendications 1 à 8, **caractérisé en ce que** le matériau adsorbant présent dans la cavité de chaque unité de préconcentration (Ui,j) est de type Tenax (marque déposée).

10. Réseau selon l'une des revendications 1 à 9, **caractérisé en ce qu'**au moins une unité de préconcentration du réseau comporte au moins un catalyseur de réaction chimique placé dans sa cavité.

11. Système de contrôle d'un flux gazeux, comprenant au moins une entrée fluidique destinée à recevoir le flux gazeux, **caractérisé en ce qu'**il comporte :
- Un réseau fluidique (R) tel que défini dans l'une des revendications 1 à 10 relié à ladite entrée fluidique,
- Un ensemble de contrôle de déplacement fluidique dans ledit réseau fluidique,
- Une unité de commande (UC) configurée pour exécuter une séquence de commande comprenant des instructions de commande à destination des moyens de chauffage de chaque unité de préconcentration dudit réseau et de l'ensemble de contrôle de déplacement fluidique dans ledit réseau.

12. Système selon la revendication 11, **caractérisé en ce que** l'ensemble de contrôle de déplacement fluidique dans ledit réseau comporte une ou plusieurs vannes (Vy) agencées dans le réseau et une ou plusieurs pompes (Px) agencées dans ledit réseau.

13. Système selon la revendication 12, **caractérisé en ce que** ladite séquence de commande comporte une succession d'états pris par chaque pompe (Px), chaque vanne (Vy) de l'ensemble de contrôle de déplacement fluidique et par chacun des moyens de chauffage de chaque unité de préconcentration du réseau.

14. Procédé de séparation de N composés gazeux présent dans un flux gazeux, N étant supérieur ou égal à 2, **caractérisé en ce qu'**il est mis en oeuvre à partir d'un réseau fluidique (R) organisé en matrice défini par n=2 et m=2 dans lequel chaque unité de préconcentration est référencé Ui,j, et **en ce qu'**il comporte au moins un cycle de séparation qui consiste, dans chaque unité de préconcentration de la matrice, à :
- Piéger au moins un premier composé gazeux dudit flux gazeux dans l'unité de préconcentration et libérer N-1 composé gazeux dudit flux gazeux vers une autre unité de préconcentration de la matrice,
- Evacuer ledit premier composé présent dans l'unité de préconcentration.
